# EUROPÄISCHE PATENTSCHRIFT

(11) **EP 1 488 881 B1**
(45) Veröffentlichungstag und Bekanntmachung des Hinweises auf die Patenterteilung: **06.04.2011**
(21) Anmeldenummer: 03013929.9
(22) Anmeldetag: 20.06.2003
(51) Int. Cl.: B23K 26/10, B23K 37/04, B23K 26/28

(54) **Werkstückspannvorrichtung einer Laserbearbeitungsmaschine**
Clamping device for a laser machining apparatus
Dispositif de serrage d'un dispositif d'usinage par laser

(43) Veröffentlichungstag der Anmeldung: 22.12.2004
(73) Patentinhaber: TRUMPF LASERTECHNIK GmbH, D-71254 Ditzingen (DE)
(72) Erfinder: Kaupp, Peter, 71069 Sindelfingen (DE); Heck, Peter, 71272 Renningen (DE)
(74) Vertreter: Kohler Schmid Möbus

(56) Entgegenhaltungen:
- EP-A- 1 249 304
- EP-A- 1 254 737
- WO-A-96/23622
- DE-A- 4 207 016
- DE-A- 10 000 103
- DE-A- 10 203 467
- DE-U- 20 112 510
- US-A- 4 607 150
- US-A- 4 973 817
- PATENT ABSTRACTS OF JAPAN vol. 012, no. 229 (M-714), 29. Juni 1988 (1988-06-29) & JP 63 026291 A (TOSHIBA CORP), 3. Februar 1988 (1988-02-03)
- PATENT ABSTRACTS OF JAPAN vol. 007, no. 025 (M-190), 2. Februar 1983 (1983-02-02) & JP 57 181789 A (TOKYO SHIBAURA DENKI KK), 9. November 1982 (1982-11-09)
- PATENT ABSTRACTS OF JAPAN vol. 018, no. 611 (M-1708), 21. November 1994 (1994-11-21) & JP 06 234089 A (TOYOTA MOTOR CORP), 23. August 1994 (1994-08-23)

## Beschreibung

Die Erfindung betrifft eine Werkstückspannvorrichtung für eine Laserbearbeitungsmaschine, welche eine Optik zur Ausrichtung des Laserstrahls auf das zu bearbeitende Werkstück aufweist.

Eine derartige Werkstückspannvorrichtung ist beispielsweise durch die DE 201 12 510 U1 bekannt geworden.

Bekannte Werkstückspannvorrichtungen haben den Nachteil, dass die Werkstückspannvorrichtungen, insbesondere bei rotierender Ausgestaltung der Optik, aufwändig aufgebaut sind, um eine genaue Zuordnung des Werkstücks zum Fokus zu erreichen.

In der Regel sind bekannte Werkstückspannvorrichtungen derart aufgebaut, dass das Werkstück rotieren kann, um eine rotationssymmetrische Bearbeitung der Fügegeometrie zu erzielen.

Rotierende Optiken zur Führung eines Bearbeitungslaserstrahls um ein Werkstück herum sind dem Stand der Technik ebenfalls zuzurechnen.

Der Erfindung liegt die Aufgabe zugrunde, einen Ersatz für die bisher aufwändigen Werkstückspannvorrichtungen zu schaffen.

Diese Aufgabe wird durch eine Werkstückspannvorrichtung einer Laserbearbeitungsmaschine mit allen Merkmalen des Anspruchs 1 gelöst.

Durch die Anbringung der Zentrierwelle, d. h. der Halterung, direkt an der Optik wird eine genaue Zuordnung des Werkstücks zum Fokus erreicht. Durch die Zentrierwelle wird das Werkstück in seiner Lage zur Optik definiert positioniert, wobei der Abstand der Werkstückoberfläche zum Fokus eingestellt wird.

Mithilfe einer federnd gelagerten Werkstückauflage zum Anpressen des Werkstücks an die Zentrierwelle wird ein definiertes Anpressen des Werkstücks an die Zentrierwelle erzielt. Dabei kann die Federkraft auf den Anwendungsfall bezogen individuell eingestellt werden.

Wenn die Zentrierwelle eine Werkstückanlage aufweist, welche in Richtung der Längsachse der Zentrierwelle (z-Achse) positionierbar ist, kann das Werkstück bezüglich des Fokus eingestellt werden.

Als typische Anwendung der Erfindung wäre beispielsweise denkbar, dass eine automatisierte Vorrichtung (Roboter) das Werkstück der Zentrierwelle zuführt und es an die Zentrierwelle anpresst. Der Roboter bleibt in dieser Position, während die Optik rotierend um die Zentrierwelle schweißt. Selbst ein entsprechend geschützter Handarbeitsplatz wäre denkbar. Oder das Werkstück wird "halbwegs" fixiert eingelegt, die Optik fährt mit der Z-Achse auf Position und rotiert um die Zentrierwelle.

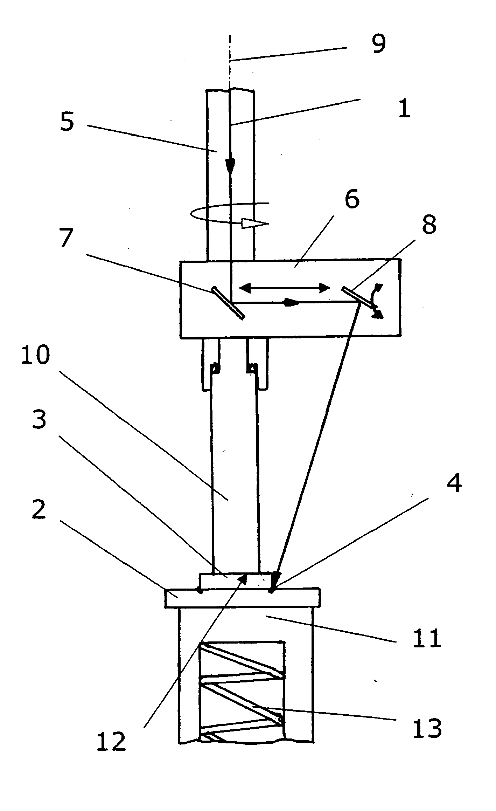

Ein bevorzugtes Ausführungsbeispiel der Erfindung ist in der Zeichnung schematisch dargestellt und wird nachfolgend mit Bezug zur Figur der Zeichnung näher erläutert.

Die Figur zeigt Teile eines Bearbeitungskopfes einer Laserbearbeitungsmaschine.

Wie aus der **Figur** ersichtlich, kann ein Laserstrahl **1** zum rotationssymmetrischen Schweißen zweier ruhender Werkstücke **2** und **3** um das Werkstück 3 herum geführt werden. Durch die Rotation des Fokus **4** entsteht eine umlaufende Schweißnaht.

Über eine Strahlführung **5** wird der Laserstrahl 1 einer Optik **6** mit einem Umlenkspiegel **7** und mit einem Fokussierspiegel **8** zugeführt. Die Rotation des Fokus 4 wird ermöglicht, indem die Optik 6 rotiernd ausgebildet ist (Rotationsachse **9**). Die Anordnung von Umlenkspiegel 7 und Fokussierspiegel 8 kann auch vertauscht sein. Die beiden Spiegel 7 und 8 können gegeneinander verstellt (siehe Doppelpfeil) werden, indem der Abstand zueinander geändert wird. Darüberhinaus ist der Fokussierspiegel 8 verkippbar angeordnet (siehe Doppelpfeil).

An der Optik 6 ist eine Zentrierwelle **10** angebracht, welche ortsfest angeordnet ist. Die Optik 6 ist drehbar an der Zentrierwelle 10 gelagert und kann um die Zentrierwelle 10 rotieren. Der Achsverlauf der Zentrierwelle 10 entspricht der Rotationsachse 9. Die Zentrierwelle 10 dient im Zusammenspiel mit einer federnd gelagerten Werkstückauflage **11** zur einstellbaren Halterung der zu schweißenden Werkstücke 2 und 3. In der Figur ist nicht dargestellt, dass eine Werkstückanlage **12** an der Zentrierewelle 10 in z-Richtung positioniert werden kann, damit der Fokus 4 bezüglich den zu schweißenden Werkstücken 2 und 3 verändert werden kann. Die axiale Erstreckung der Zentrierwelle 10 könnte beispielsweise teleskopierbar variiert und eingestellt werden, oder die Werkstückanlage 12 könnte mittels einer Einstellschraube heraus oder herein gedreht werden.

Durch die entsprechende Geometrie der Zentrierwelle 10 wird das Werkstück 3 zentriert und bezüglich zum Fokussierspiegel 8 ausgerichtet. Es wird in seiner Lage direkt an der Optik 6 zentriert. Der Abstand der Werkstückoberfläche zum Fokus 4 wird definiert.

Mithilfe einer Feder **13** mit einer einstellbaren Federkraft kann die Werkstückauflage 11 für ein definiertes Andrücken der Werkstücke 2 und 3 an die Zentrierwelle 10 sorgen.

### BEZUGSZEICHENLISTE

- 1: Laserstrahl
- 2: Werkstück
- 3: Werkstück
- 4: Fokus
- 5: Strahlführung
- 6: Optik
- 7: Umlenkspiegel
- 8: Fokussierspiegel
- 9: Rotationsachse
- 10: Zentrierwelle
- 11: Werkstückauflage
- 12: Werkstückanlage
- 13: Feder

## Patentansprüche

1. Werkstückspannvorrichtung für eine Laserbearbeitungsmaschine, welche eine Optik (6) zur Ausrichtung des Laserstrahls (1) auf das zu bearbeitende Werkstück (2, 3) aufweist, **dadurch gekennzeichnet, dass** die Optik (6) an einer Zentrierwelle (10) um deren Längsachse drehbar gelagert ist, wobei eine federnd gelagerte Werkstückauflage (11) als Gegenstück zum Anpressen des Werkstücks (2, 3) an die Zentrierwelle (10) vorgesehen ist.

2. Werkstückspannvorrichtung nach Anspruch 1, **dadurch gekennzeichnet, dass** die Werkstückanlage in Richtung der Längsachse der Zentrierwelle (z-Achse) positionierbar ist.

3. Werkstückspannvorrichtung nach einem der vorhergehenden Ansprüche, **dadurch gekennzeichnet, dass** ein Roboterarm zum Zuführen und Anpressen des Werkstücks (2, 3) an die Mittel zur Halterung des Werkstücks vorgesehen ist.

## Claims

1. Workpiece clamping device for a laser processing machine, comprising an optics (6) for adjusting the laser beam (1) onto the workpiece (2, 3) to be processed, **characterized in that** the optics (6) is supported on a centering axle (10) such that it can be rotated about the longitudinal axis thereof, wherein a resiliently mounted workpiece support (11) is provided as a counterpiece for pressing the workpiece (2, 3) to the centering axle (10).

2. Workpiece clamping device according to claim 1, **characterized in that** the workpiece support can be positioned in the direction of the longitudinal axis of the centering axle (z axis).

3. Workpiece clamping device according to any one of the preceding claims, **characterized in that** a robot arm is provided for supplying and pressing the workpiece (2, 3) to the means for holding the workpiece.

## Revendications

1. Dispositif de serrage de pièce pour une machine d'usinage par laser, lequel présente une optique (6) pour aligner le faisceau laser (1) sur la pièce à usiner (2, 3), **caractérisé en ce que** l'optique (6) est montée tournante sur un arbre de centrage (10) autour de son axe longitudinal, un support de pièce (11) monté sur ressort étant prévu comme élément complémentaire pour appuyer la pièce (2, 3) contre l'arbre de centrage (10).

2. Dispositif de serrage de pièce selon la revendication 1, **caractérisé en ce que** le support de pièce est positionnable dans la direction de l'axe longitudinal de l'arbre de centrage (axe z).

3. Dispositif de serrage de pièce selon une des revendications précédentes, **caractérisé en ce qu'**un bras de robot est prévu pour amener la pièce (2, 3) et l'appuyer contre les moyens de retenue de la pièce.
